# EUROPÄISCHE PATENTSCHRIFT

(11) **EP 3 631 949 B1**
(45) Veröffentlichungstag und Bekanntmachung des Hinweises auf die Patenterteilung: **11.01.2023**
(21) Anmeldenummer: 18727664.7
(22) Anmeldetag: 17.05.2018
(51) Int. Cl.: H02K 5/128

(54) **BETÄTIGUNGSAKTOR MIT ABDICHTENDEM SPALTROHR**
ACTUATOR WITH A SEALING AIR GAP SLEEVE
ACTIONNEUR COMPORTANT UNE CHEMISE D'ENTREFER ÉTANCHANTE

(30) Priorität: 31.05.2017 DE 102017111892
(43) Veröffentlichungstag der Anmeldung: 08.04.2020
(73) Patentinhaber: Schaeffler Technologies AG & Co. KG, 91074 Herzogenaurach (DE)
(72) Erfinder: FRANZ, Viktor, 76137 Karlsruhe (DE); HUCK, Michael, 77830 Bühlertal (DE)
(86) Internationale Anmeldenummer: PCT/DE2018/100474
(87) Internationale Veröffentlichungsnummer: WO 2018/219399

(56) Entgegenhaltungen:
- WO-A1-2015/149777
- DE-A1- 10 000 431
- DE-A1- 10 064 717
- DE-A1-102006 022 772
- DE-A1-102016 222 149
- DE-B3-102014 113 412
- DE-U- 1 925 887
- DE-U- 6 907 388

## Beschreibung

Die Erfindung betrifft einen Betätigungsaktor für ein Kupplungs- und/oder ein Bremssystem, oder für ein Getriebe oder ein anderes Aggregat, eines Kraftfahrzeugs, mit einem Gehäuse, in dem eine Elektromaschine mit einem Stator und einem drehbar zu diesem Stator angeordneten Rotor angeordnet ist, die ausgelegt ist, um einen Kolben axial zu verfahren, wobei der Rotor von einem Betriebsfluid, wie einer Brems- oder Hydraulikflüssigkeit, umgeben ist.

Aus dem Stand der Technik sind bereits Kupplungsaktoren bekannt. Zum Beispiel offenbart die WO 2015/149777 A1 einen Betätigungsaktuator mit einem Gehäuse mit einem Gehäuseinnenraum, in welchen ein Antriebsmotor und eine KolbenZylindereinheit und ein Druckmittelreservoir angeordnet sind, wobei die KolbenZylindereinheit einen Zylinderraum mit einem darin verlagerbar angeordneten Kolben aufweist, wobei der Zylinderraum Teil des Gehäuseinnenraums ist und von einer mit dem Kolben verbundenen Dichtung abdichtbar ist, wobei das Druckmittelreservoir mit dem Gehäuseinnenraum ein gemeinsames Volumen bildet.

Aus der DE 10 2006 022 772 A1 ist ein Pumpenaktor mit einem Spaltrohrmotor bekannt. Weitere Ausführungsformen und Anordnungen von Spaltrohren sind aus der DE 19 25 887 U und DE 10 2014 113 412 B3 bekannt.

Nachteilig an diesen herkömmlichen Kupplungsaktoren ist, dass mit Betriebsmedium geflutete Elektromotoren zum Antrieb der Aktoren eingesetzt werden, so dass ein Schutz der Lackdrahtisolierung vor Betriebsmedium zur Gewährleistung des Isolationswiderstandes sichergestellt werden muss. Bisher wird dazu eine mediendichte Umspritzung des Stators zum Schutz der Statorwicklung eingesetzt, da die Isolation üblicherweise unter Einwirkung von Bremsflüssigkeit aufgelöst wird. Weil jedoch bei dem Umspritzvorgang des Stators Bindenähte zwischen einem Isolationsschuh und einer Endumspritzung entstehen (da eine nötige Aktivierungsenergie zum Anschmelzen wegen der hohen, thermischen Masse des Statorpakets/Blechpakets schlecht einbringbar ist) und die umspritzten Blechpakete der Wicklungen und des Isolationsschuhes bzw. der Endumspritzung unterschiedliche Ausdehnungskoeffizienten haben, treten im Betrieb des Bauteils thermisch induzierte Spannungen auf, so dass Risse zwischen den umspritzten Bauteilen entstehen. Als eine Folge kann das Betriebsmedium den Kupferlackdraht der Statorwicklung benetzen, wodurch sich die Lackdrahtisolierung auflösen kann. Dies führt dazu, dass der Isolationswiderstand der Statorwicklung bis zu einem Windungs- oder Masseschluss hin abnehmen kann, was einen Ausfall des Kupplungsaktors hervorrufen kann.

Weiterhin ist aus dem kupplungsfremden Anwendungsgebiet der Pumpenaktoren/Kühlmittelaktoren bekannt, ein Spaltrohr zwischen dem Stator und dem Rotor einzubringen, so dass der Stator abgedichtet wird. Zum Beispiel offenbart die EP 0 530 786 A2 einen Spalttopf für einen Spaltrohrmotor, mit einem Spaltrohr, dessen Innenraum als Rotorraum zur Aufnahme eines Rotors des Spaltrohrmotores dient, mit einem an einem hinteren Ende des Spaltrohres angeordneten, dieses Ende abschließenden Boden, der einen gegenüber dem Spaltrohr durchmessergeringeren Rohrabschnitt aufweist, der zur Aufnahme eines hinteren Lagers des Rotors dient, wobei das Spaltrohr, der Boden und dessen Rohrabschnitt als einstückiges Tiefziehteil ausgebildet sind, und dass an einem vorderen Ende des Spaltrohres, einstückig mit diesem, ein Ringflansch ausgeformt ist.

Auch offenbart die WO 2014/102174 A2 ein Pumpenaggregat mit einem in einem Statorgehäuse angeordneten elektrischen Antriebsmotor und einem mit dem Statorgehäuse verbundenen Elektronikgehäuse, in welchem zumindest eine Leiterplatte mit elektronischen Bauelementen angeordnet ist, wobei an oder in dem Elektronikgehäuse zumindest ein separates, als Kunststoffformteil ausgebildetes Anschlusselement angeordnet ist, das über eine erste elektrische Verbindung mit der Leiterplatte verbunden ist, sowie eine zweite elektrische Verbindung in Form eines elektrischen Steckverbinders aufweist, welcher mit der ersten elektrischen Verbindung über Leiterbahnen verbunden ist und einem elektrischen Anschluss eines außerhalb des Elektronikgehäuses gelegenen Bauteiles dient.

Ferner offenbart die EP 2 738 391 B1 eine elektrische Kühlmittelpumpe mit einer Pumpensektion und einem elektronisch kommutierten Spaltrohr- Antriebsmotor, der aufweist: einen innenliegenden Motorrotor und außenliegende Statorspulen, einen Spulenträger, der alle Statorspulen trägt, eine Motorelektronik, die an dem der Pumpensektion gegenüberliegenden Längsende der Kühlmittelpumpe angeordnet ist, und einen separaten Spaltrohrkörper, der einen Kühlmittelraum, in dem der Motorrotor angeordnet ist, von einem Trockenraum trennt, in dem der Spulenträger mit den Statorspulen angeordnet ist, wobei der Spaltrohrkörper und der Spulenträger komplementäre Formschlussmittel aufweisen, die eine eindeutige rotatorische und axiale Positionierung des Spulenträgers zu dem Spaltrohrkörper gewähren, wobei das Formschlussmittel des Spaltrohrkörpers außenseitig am Spaltrohrkörper angeordnet ist, und dass der Spaltrohrkörper mindestens eine axiale Leitungshülse aufweist, durch die eine Spulenleitung führt, und die der Führung der Spulenleitung zwischen den Statorspulen und der Motorelektronik dient.

Zusätzlich offenbart die CH 437 502 einen Spaltrohrmotor für den Antrieb von Pumpen in horizontaler Lage, wobei eine Abrichtung zwischen dem Spaltrohr und einem pumpenseitigem Lagerschild am Außenumfang des Spaltrohrs vorhanden ist, und wobei in der das Spaltrohrende aufnehmenden Lagerschildnabe, an der tiefsten Stelle derselben unmittelbar am Spaltrohr, eine Abflussöffnung aus dem Spaltrohrraum nach außen vorhanden ist.

Bis jetzt ist der Einsatz eines Spaltrohrs bzw. eines Spaltrohrmotors aber nur für Pumpenantriebe bekannt.

Es ist also die Aufgabe der Erfindung, eine Betätigung für einen Kupplungsaktor bereitzustellen, bei der der Stator vor dem Betriebsmedium sicher geschützt wird, um den Isolationswiderstand zu gewährleisten.

Die Aufgabe der Erfindung wird bei einer gattungsgemäßen Vorrichtung erfindungsgemäß durch die Merkmale des Anspruchs 1 gelöst.

Zwischen dem Gehäuse und dem Rotor ist ein über eine erste Dichtung und über eine zweite Dichtung den Stator, insbesondere die Statorwicklung, gegenüber dem Betriebsfluid abdichtendes Spaltrohr, das beispielsweise als eine dünnwandige Hülse, zum Beispiel aus Edelstahl, ausgebildet ist, angeordnet, wobei die erste Dichtung und die zweite Dichtung in Anlage mit dem Gehäuse und dem Spaltrohr sind. Ein Rohr/eine Hülse aus Edelstahl bietet sich vor allem an, da es/sie hinsichtlich ihrer Wandstärke und ihrer Permeabilität besonders vorteilhaft ausgeführt werden kann. Dies hat den Vorteil, dass ein Eindringen von Betriebsfluid zum Stator/der Paketierung hin sicher verhindert werden kann, so dass der Isolationswiderstand der Statorwicklung nicht beeinflusst wird. Außerdem kann so durch eine besonders einfache, bauraumsparende und kostengünstige Konstruktion der Stator geschützt werden.

Vorteilhafte Ausführungsformen werden in den Unteransprüchen beansprucht.

Zusätzlich ist es zweckmäßig, wenn zwischen einem an dem Gehäuse ausgebildeten Statorgehäuse, das den Stator einhaust, und dem Spaltrohr die erste Dichtung angeordnet ist. Dabei kann das Statorgehäuse auch als eine Kunststoffumspritzung des Stators ausgebildet sein. Vorteilhafterweise wird so also ein Eindringen eines Fluids zwischen dem Gehäuse, insbesondere dem Statorgehäuse, und dem Spaltrohr verhindert. Insbesondere wird die erste Dichtung im Bereich eines Endes des Spaltrohrs angeordnet.

Ferner ist es vorteilhaft, wenn zwischen dem Gehäuse und dem Spaltrohr die zweite Dichtung angeordnet ist. So wird also verhindert, dass das Fluid an einer der beiden Enden des Spaltrohrs zwischen dem Spaltrohr und dem Gehäuse hindurchdringen kann. Das Spaltrohr bildet also zusammen mit dem Gehäuse, dem Statorgehäuse, der ersten Dichtung und der zweiten Dichtung eine fluiddichte Umschließung des Stators. Insbesondere wird der Stator zu dem Rotor, der mit Betriebsmedium umgeben ist, abgedichtet.

Insbesondere wenn die erste Dichtung an einem ersten, axialen Ende des Spaltrohrs, vorzugsweise an einem distalen, d.h. kolbenfernen bzw. kolbenabgewandten Ende, angeordnet ist und die zweite Dichtung an einem zweiten, axialen Ende des Spaltrohrs, vorzugsweise an einem proximalen, d.h. kolbennahen bzw. kolbenzugewandten Ende, angeordnet ist, dann kann die vollständige Abdichtung des Stators gegenüber dem Betriebsfluid realisiert werden.

Erfindungsgemäß ist die Elektromaschine in Wirkzusammenhang mit einem Linearantrieb gekoppelt, der ausgelegt ist, um den Kolben bei Bewegung zu verfahren. So kann vorteilhafterweise eine Kolbenbetätigung zur Kupplungsbetätigung über die Elektromaschine umgesetzt werden.

Ferner ist es von Vorteil, wenn der Linearantrieb als ein Planetenwälzgewindetrieb ausgebildet ist, da so eine axiale Verlagerung des Kolbens über ein Getriebe mit einer gewünschten Übersetzung betätigt werden kann.

Dabei ist es bevorzugt, wenn der Linearantrieb mit einer Spindel, insbesondere mit einer linear bewegten Spindel, ausgeführt ist, so dass die rotatorische Bewegung der Elektromaschine in eine lineare Translation der Spindel und damit des Kolben umgesetzt werden kann.

Zusätzlich ist es zweckmäßig, wenn die erste Dichtung und/oder die zweite Dichtung als Dichtungsring/O-Ring ausgebildet sind/ist. O-Ringe sind besonders kostengünstig, da sie standardgemäß als Dichtung eingesetzt werden. Außerdem sind sie sehr zuverlässig und für jegliche Anforderungen geeignet.

Auch ist es erfindungsgemäß vorgesehen, dass die erste Dichtung und/oder die zweite Dichtung als Klebedichtung oder aus Kleber (d.h. ein adhäsiv wirkendes Fluid, das zwei Bereiche gegenüber einander abdichtet) ausgebildet sind/ist. Klebedichtungen können besonders dann gut eingesetzt werden, wenn z.B. der Einsatz eines O-Rings nicht möglich ist oder eine größere Fläche abgedichtet werden soll. Gleichzeitig bietet eine Klebedichtung den Vorteil, dass sie zusätzlich die Position der geklebten Bauteile gegenüber einander festlegt. Auch hinsichtlich der thermischen Alterung bietet eine Klebedichtung einen Vorteil gegenüber einem O-Ring. Denn dieser kann thermisch altern, wodurch sich der Kontaktdruck an den Wandungen verringert und die Dichtfähigkeit herabgesetzt wird. Ein weiterer Vorteil der Dichtung über den Dichtkleber ist, dass bei der Herstellung des Spaltrohrs und der Statorwandung eine geringe Oberflächengüte realisiert werden muss. Außerdem weist die Klebenaht/Klebedichtung eine bessere thermische Stabilität auf.

In einem bevorzugten Ausführungsbeispiel wird als erste Dichtung und als zweite Dichtung ein Dichtungsring/O-Ring eingesetzt.

In einem weiteren bevorzugten Ausführungsbeispiel wird die erste Dichtung als Klebedichtung und die zweite Dichtung als Dichtungsring ausgebildet.

Es ist aber auch möglich, die erste Dichtung als Dichtungsring und die zweite Dichtung als Klebedichtung auszuführen. Weiter ist es möglich, die erste Dichtung und die zweite Dichtung als Klebedichtung auszuführen.

Ferner ist es erfindungsgemäß vorgesehen, dass das erste, axiale Ende und/oder das zweite, axiale Ende des Spaltrohrs in einer Nut/Dichtnut in dem Gehäuse angeordnet sind/ist.

Insbesondere das erste oder zweite axiale Ende, das mit einer als Klebedichtung ausgeführten Dichtung versehen ist, wird in der Nut angeordnet, da so vorteilhafterweise eine besonders dichte Verbindung innerhalb der Nut zwischen dem Gehäuse bzw. Statorgehäuse und dem Spaltrohr erzeugt werden kann. Außerdem kann durch die Ausgestaltung einer Dichtnut mit einer ausreichenden Länge und einer definierten Breite einer zyklischen Belastung aufgrund der unterschiedlichen Ausdehnungskoeffizienten der verklebten Teile entgegengewirkt werden.

Auch ist es von Vorteil, wenn das Spaltrohr in der Nut mit der Klebedichtung/mit dem Kleber befestigt wird, so dass die Dichtung zwischen dem Stator und dem Rotor erzeugt wird.

Ein vorteilhaftes Ausführungsbeispiel zeichnet sich dadurch aus, dass das Spaltrohr so ausgebildet ist, dass sich der Innendurchmesser des Spaltrohrs von dem zweiten, axialen Ende zu dem ersten, axialen Ende hin verringert.

Bevorzugt ist es auch, wenn sich der Innendurchmesser des Spaltrohrs stufenartig verringert. Dabei bildet das Spaltrohr also mehrere Bereiche, insbesondere zwei, drei, vier, fünf oder sechs Bereiche, unterschiedlichen Durchmessers aus.

Ferner ist es von Vorteil, wenn an dem ersten, axialen Ende des Spaltrohrs ein radial nach innen geneigter Abschnitt ausgebildet ist, so dass ein Dichtungsring dort gut anliegen kann, oder dieser Abschnitt in die Dichtnut eingeschoben werden kann.

Zusätzlich kann an dem zweiten, axialen Ende des Spaltrohrs ein radial nach außen abstehender Flansch ausgebildet sein, so dass der Dichtungsring an dem Flansch axial anliegen kann.

Weiterhin ist es zweckmäßig, wenn das Spaltrohr mit einer konstanten/gleichbleibenden Dicke über die gesamte axiale Länge ausgebildet ist.

Mit anderen Worten betrifft die Erfindung einen Betätigungsaktor (Modular Clutch Actuator, abgekürzt MCA) mit einem mit einem Betriebsmedium gefluteten Motor zum Antrieb. Dabei wird eine dünnwandige Edelstahlhülse zwischen dem Stator und dem Rotor eingebracht, wobei die Hülse zum Stator hin mit verschiedenen Abdichtungen versehen ist, um den Kontakt des Betriebsmediums mit der Statorwicklung sicher auszuschließen. Bei herkömmlichen Betätigungsaktoren ist das Blechpaket zum Rotor und zum Gehäuse offen, und eine Abdichtung wird zwischen der Statorumspritzung und dem Isolationsschuh eingebracht.

Erfindungsgemäß wird zwischen dem Rotor und dem Stator ein Spaltrohr eingefügt, das an der einen Seite mittels eines O-Rings zur Statorumspritzung hin und an der anderen Seite mit einem anderen O-Ring zum Gehäuse hin abgedichtet wird. Dadurch wird also das Betriebsmedium zwischen diesem Bereich, nämlich der Paketierung, von der Statorwicklung ferngehalten. Grundsätzlich ist es dabei auch möglich, diesen Bereich durch eine Umspritzung abzudichten. Jedoch müsste diese aufgrund der Fließfähigkeit dicker vorumspritzt und anschließend wieder ausgefräst werden, damit eine ausreichend dünne Wandstärke, die für die Motorperformance relevant ist, erreicht werden kann. Denn durch den Bauraum des Luftspalts zwischen dem Rotormagnet und dem Statorjoch wird die Leistungsfähigkeit des Motors bestimmt.

In einer anderen erfindungsgemäßen Lösung wird das Spaltrohr mittels Dichtkleber abgedichtet. Dazu wird das Ende des Spaltrohrs optional in einer Dichtnut angeordnet und zur Erzeugung der Dichtheit mit dem Gehäuse und/oder dem Statorgehäuse/der Statorumspritzung verklebt.

Die Erfindung wird nachfolgend mit Hilfe von Zeichnungen erläutert. Es zeigen:
- Fig. 1: eine Querschnittsdarstellung eines erfindungsgemäßen Betätigungsaktors mit einem Spaltrohr in einem ersten Ausführungsbeispiel,
- Fig. 2: eine vergrößerte Darstellung des Bereichs II aus Fig. 1,
- Fig. 3: eine vergrößerte Darstellung des Bereichs III aus Fig. 1,
- Fig. 4: eine Querschnittsdarstellung des Spaltrohrs und umliegender Bauteile in dem ersten Ausführungsbeispiel,
- Fig. 5: eine Querschnittsdarstellung des erfindungsgemäßen Betätigungsaktors mit dem Spaltrohr in einem zweiten Ausführungsbeispiel,
- Fig. 6: eine vergrößerte Darstellung des Bereichs VI aus Fig. 5, und
- Fig. 7: eine Querschnittsdarstellung des Spaltrohrs und umliegender Bauteile in dem zweiten Ausführungsbeispiel.

Die Figuren sind lediglich schematischer Natur und dienen ausschließlich dem Verständnis der Erfindung. Die gleichen Elemente sind mit den gleichen Bezugszeichen bezeichnet. Die Merkmale der unterschiedlichen Ausführungsbeispiele können beliebig untereinander ausgetauscht werden.

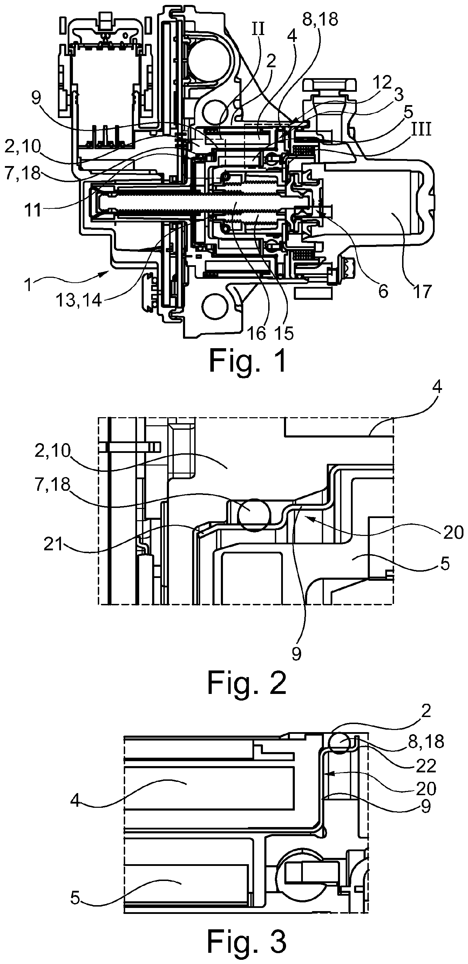

Fig. 1 zeigt einen erfindungsgemäßen Betätigungsaktor 1 für ein Kupplungs- oder ein Bremssystem eines Kraftfahrzeugs. Der Betätigungsaktor 1 weist ein Gehäuse 2 auf, in dem eine Elektromaschine 3 angeordnet ist. Die Elektromaschine 3 besitzt einen Stator 4 und einen drehbar zu diesem Stator 4 angeordneten, konzentrischen, radial innerhalb liegenden Rotor 5. Die Elektromaschine 3 ist ausgelegt, um einen Kolben 6 axial zu verlagern.

Der Rotor 5 wird von einem Betriebsfluid, insbesondere von einer Bremsflüssigkeit, umgeben. Zwischen dem Gehäuse 2 und dem Rotor 5 ist ein über eine erste Dichtung 7 und über eine zweite Dichtung 8 abdichtendes Spaltrohr 9 angeordnet, das ausgelegt ist, um den Stator 4 gegenüber dem Rotor 5 mit dem Betriebsfluid abzudichten. Dabei liegen die erste Dichtung 7 und die zweite Dichtung 8 mit dem Gehäuse 2 und dem Spaltrohr 9 in Anlage.

Genauer gesagt liegt die erste Dichtung 7 mit einem an dem Gehäuse 2 oder separat von dem Gehäuse 2 ausgebildeten Statorgehäuse 10 und dem Spaltrohr 9 in Anlage. Dabei ist das Statorgehäuse 10 eine Einhausung des Stators 4 und kann auch als Kunststoffumspritzung ausgebildet sein. Das Statorgehäuse 10 kann aber auch als Teil des Gehäuses 2 ausgebildet sein oder mit dem Gehäuse 2 verbunden sein.

Die zweite Dichtung 8 ist direkt zwischen dem Gehäuse 2 und dem Spaltrohr 9 angeordnet. Die erste Dichtung 7 liegt dabei an einem ersten, axialen Ende 11 des Spaltrohrs 9 an. Das erste, axiale Ende 11 ist in den Zeichnungen das linke axiale Ende des Spaltrohrs 9, also ein Ende, das von dem Kolben 6 abgewandt ist. Die zweite Dichtung 8 liegt an einem zweiten, axialen Ende 12 des Spaltrohrs 9 an. Das zweite, axiale Ende 12 ist in den Zeichnungen das recht axiale Ende des Spaltrohrs 9, also ein Ende, das dem Kolben 6 zugewandt ist. Das erste, axiale Ende 11 wird auch als das distale Ende bezeichnet und das zweite, axiale Ende 12 als das proximale Ende.

Die Elektromaschine 3 steht in Wirkzusammenhang mit einem Linearantrieb 13, der radial innerhalb des Rotors 5 ausgebildet ist. Der Linearantrieb 13 ist als Planetenwälzgewindetrieb 14 ausgebildet, der über ein Planetengetriebe 15 eine Spindel 16 antreibt, so dass also die rotatorische Bewegung des Rotors 5 in einer translatorische Bewegung der Spindel 16 und des damit verbunden Kolbens 6 umgesetzt wird. Der Kolben 6 kann dadurch in einem Zylinderraum 17 bewegt werden und dadurch die Kupplung oder die Bremse betätigen.

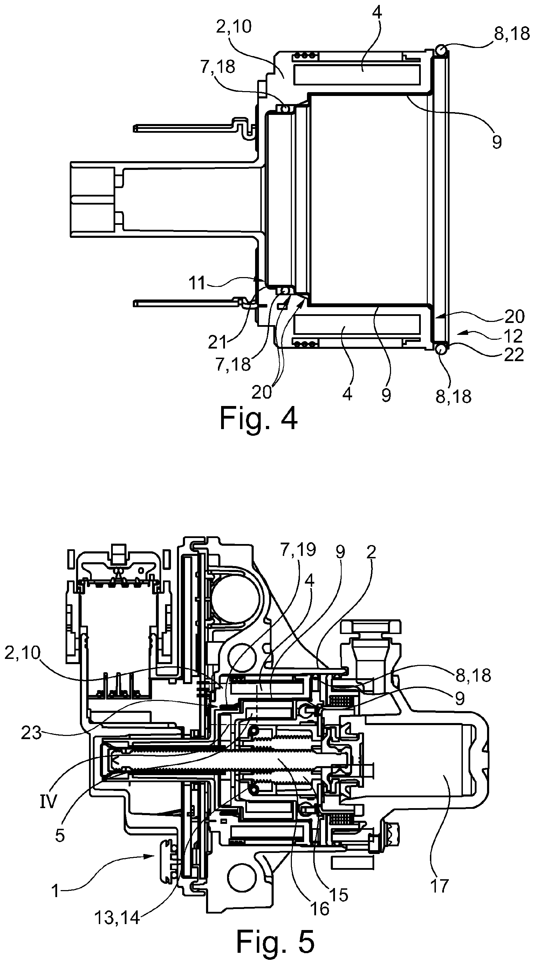

Fig. 2 und Fig. 3 zeigen detaillierte Darstellungen der ersten Dichtung 7 und der zweiten Dichtung 8. Die erste Dichtung 7 ist in einem ersten Ausführungsbeispiel als ein Dichtungsring/O-Ring 18 ausgebildet (vergleiche Fig. 2). Sie ist radial außerhalb des Spaltrohrs 9 und radial innerhalb der Statorumspritzung/des Statorgehäuses 10 angeordnet und verhindert also, dass die Wicklungen des Stators 4 mit Betriebsfluid in Kontakt gelangen. In einem zweiten Ausführungsbeispiel (vergleiche Fig. 5, Fig. 6 und Fig. 7) ist die erste Dichtung 7 als Klebedichtung 19, also als Dichtung mittels Dichtkleber ausgeführt.

Das Spaltrohr 9 ist so ausgebildet, dass sich der Innendurchmesser von dem zweiten, axialen Ende 12 zu dem ersten, axialen Ende 11 hin stufenweise verringert. Die erste Dichtung 7 liegt also zwischen einer Stufe 20 des Spaltrohrs 9 auf der einen axialen Seite und einer Stufe im Gehäuse 2, bzw. im Statorgehäuse 10, auf der anderen axialen Seite. Das Spaltrohr 9 ist mit mehreren solcher Stufen 20 ausgebildet, so dass es sich an die Geometrie des Gehäuses 2 und des Statorgehäuses 10 anpasst. In der dargestellten Ausführungsform ist das Spaltrohr 9 mit drei Stufen 20 ausgebildet, die Bereiche unterschiedlichen Innendurchmessers miteinander verbinden.

An dem ersten, axialen Ende 11 ist am Spaltrohr 9 eine Schräge 21 ausgebildet, so dass ein Abschnitt des Spaltrohrs 9 radial nach innen geneigt wird. An dem zweiten, axialen Ende 12 ist am Spaltrohr 9 ein radial nach außen abstehender Flansch 22 ausgebildet. Die zweite Dichtung 8 ist als Dichtungsring 18 ausgeführt und liegt axial zwischen dem Flansch 22 und dem Statorgehäuse 10. Die zweite Dichtung 8 liegt radial außerhalb des Spaltrohrs 9 und radial innerhalb des Gehäuses 2.

In Fig. 4 ist gut zu erkennen, dass das Spaltrohr 9 als rotationssymmetrisches Bauteil, das eine topfartige oder rohrartige Geometrie mit zwei offenen axialen Enden aufweist, ausgebildet ist. Das Spaltrohr 9 besitzt eine konstante Dicke über die gesamte axiale Länge. Das Spaltrohr 9 ist durch Umformen eines Blechmaterials, z.B. Edelstahl, hergestellt.

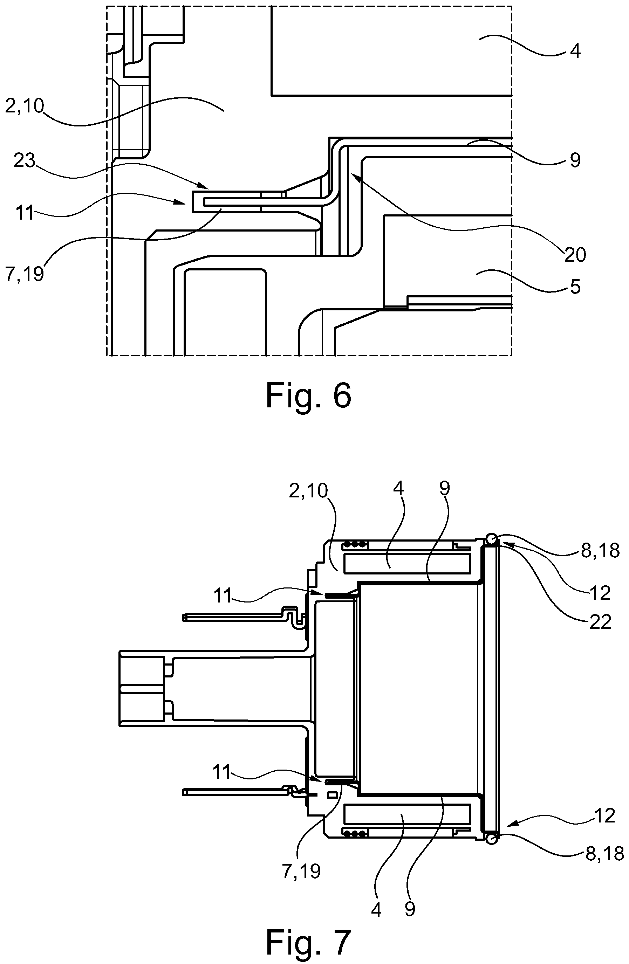

Fig. 5 ist genauso wie Fig. 1 ausgebaut. Jedoch unterscheiden sich die beiden Ausführungsbeispiel in dem Bereich II der Fig. 1, der als Bereich VI in Fig. 5 ausgebildet ist. Die erste Dichtung 7 ist in Fig. 5 als Klebedichtung 19 ausgeführt. Dabei wird das erste, axiale Ende 11 des Spaltrohrs 9 in einer Dichtnut 23 (vergleiche Fig. 6) angeordnet und mit einem Kleber umspritzt. Durch diese stoffschlüssige Verbindung zwischen dem Stator 4 und dem Statorgehäuse 10 kann das Betriebsfluid also nicht in den Bereich radial außerhalb des Spaltrohrs 9 gelangen.

Die Dichtnut 23 ist mit einer definierten Breite ausgebildet und öffnet sich zum Gehäuseinnenraum über eine Anschrägung. Die Länge der Dichtnut 23 ist mindestens doppelt so groß wie die Breite des in dem ersten Ausführungsbeispiel verwendeten Dichtungsrings 18. Das Spaltrohr 9 ist in dem zweiten Ausführungsbeispiel an seinem ersten, axialen Ende 11 gerade ausgebildet.

Das Spaltrohr 9 wird so umspritzt, dass die Dichtnut 23 mindestens bis zu der Hälfte vollständig ausgespritzt ist. Das heißt, dass die am weitesten in dem Statorgehäuse 10 liegende Stelle der Dichtnut 23 vollständig mit dem Kleber bzw. mit der Klebenaht ausgefüllt ist. Das Spaltrohr 9, das in dem zweiten Ausführungsbeispiel verwendet wird, ist mit zwei Stufen 20 ausgebildet und auch als rotationssymmetrisches Bauteil äquivalent zu dem ersten Ausführungsbeispiel.

### Bezugszeichenliste

1 Betätigungsaktor
2 Gehäuse
3 Elektromaschine
4 Stator
5 Rotor
6 Kolben
7 erste Dichtung
8 zweite Dichtung
9 Spaltrohr
10 Statorgehäuse
11 erstes, axiales Ende
12 zweites, axiales Ende
13 Linearantrieb
14 Planetenwälzgewindetrieb
15 Planetengetriebe
16 Spindel
17 Zylinderraum
18 Dichtungsring/O-Ring
19 Klebedichtung
20 Stufe
21 Schräge
22 Flansch
23 Dichtnut/Nut

## Patentansprüche

1. Betätigungsaktor (1) für ein Kupplungs- und/oder ein Bremssystem eines Kraftfahrzeugs, mit einem Gehäuse (2), in dem eine Elektromaschine (3) mit einem Stator (4) und einem drehbar zu diesem Stator (4) angeordneten Rotor (5) angeordnet ist, die ausgelegt ist, um einen Kolben (6) axial zu verfahren, wobei der Rotor (5) von einem Betriebsfluid umgeben ist und die Elektromaschine (3) in Wirkzusammenhang mit einem Linearantrieb (13) gekoppelt ist, der ausgelegt ist, um den Kolben (6) bei Bewegung zu verfahren, **dadurch gekennzeichnet, dass** zwischen dem Gehäuse (2) und dem Rotor (5) ein über eine erste Dichtung (7) und über eine zweite Dichtung (8) den Stator (4) gegenüber dem Betriebsfluid abdichtendes Spaltrohr (9) angeordnet ist, wobei die erste Dichtung (7) und die zweite Dichtung (8) in Anlage mit dem Gehäuse (2) und dem Spaltrohr (9) sind,
die erste Dichtung (7) und/oder die zweite Dichtung (8) als Klebedichtung (19) oder als Kleber ausgebildet sind/ist und
das erste, axiale Ende (11) und/oder das zweite, axiale Ende (12) des Spaltrohrs (9) in einer Nut (23) in dem Gehäuse (2) angeordnet sind/ist.

2. Betätigungsaktor (1) nach Anspruch 1, **dadurch gekennzeichnet, dass** die erste Dichtung (7) zwischen einem an dem Gehäuse (2) ausgebildeten Statorgehäuse (10), das den Stator (4) einhaust, und dem Spaltrohr (9) angeordnet ist.

3. Betätigungsaktor (1) nach Anspruch 1 oder 2, **dadurch gekennzeichnet, dass** die zweite Dichtung (8) zwischen dem Gehäuse (2) und dem Spaltrohr (9) angeordnet ist.

4. Betätigungsaktor (1) nach einem der Ansprüche 1 bis 3, **dadurch gekennzeichnet, dass** die erste Dichtung (7) an einem ersten, axialen Ende (11) des Spaltrohrs (9) angeordnet ist und die zweite Dichtung (8) an einem zweiten, axialen Ende (12) des Spaltrohrs (9) angeordnet ist.

5. Betätigungsaktor (1) nach Anspruch 1, **dadurch gekennzeichnet, dass** der Linearantrieb (13) als ein Planetenwälzgewindetrieb (14) ausgebildet ist.

6. Betätigungsaktor (1) nach einem der Ansprüche 1 bis 5, **dadurch gekennzeichnet, dass** die erste Dichtung (7) und/oder die zweite Dichtung (8) als Dichtungsring (18) ausgebildet sind/ist.

7. Betätigungsaktor (1) nach einem der Ansprüche 1 bis 6, **dadurch gekennzeichnet, dass** das Spaltrohr (9) so ausgebildet ist, dass sich der Innendurchmesser des Spaltrohrs (9) von dem zweiten, axialen Ende (12) zu dem ersten, axialen Ende (11) hin verringert.

## Claims

1. An actuator (1) for a clutch and/or a brake system of a motor vehicle, having a housing (2) in which an electric machine (3) having a stator (4) and a rotor (5) arranged rotatably with respect to said stator (4) is arranged, which electric machine is designed to displace a piston (6) axially, wherein the rotor (5) is surrounded by an operating fluid and the electric machine (3) is operatively coupled to a linear drive (13), which is designed to displace the piston (6) during movement, **characterised in that** a gap tube (9) sealing the stator (4) with respect to the operating fluid via a first seal (7) and via a second seal (8) is arranged between the housing (2) and the rotor (5), wherein the first seal (7) and the second seal (8) are in contact with the housing (2) and the gap tube (9),
the first seal (7) and/or the second seal (8) are/is designed as an adhesive seal (19) or as an adhesive, and
the first axial end (11) and/or the second axial end (12) of the gap tube (9) are/is arranged in a groove (23) in the housing (2).

2. The actuator (1) according to claim 1, **characterised in that** the first seal (7) is arranged between a stator housing (10), which is formed on the housing (2) and which accommodates the stator (4), and the gap tube (9).

3. The actuator (1) according to claim 1 or 2, **characterised in that** the second seal (8) is arranged between the housing (2) and the gap tube (9).

4. The actuator (1) according to any one of claims 1 to 3, **characterised in that** the first seal (7) is arranged at a first axial end (11) of the split tube (9) and the second seal (8) is arranged at a second axial end (12) of the gap tube (9).

5. The actuator (1) according to claim 1, **characterised in that** the linear drive (13) is designed as a planetary roller screw drive (14).

6. The actuator (1) according to any one of claims 1 to 5, **characterised in that** the first seal (7) and/or the second seal (8) are/is designed as a sealing ring (18).

7. The actuator (1) according to any one of claims 1 to 6, **characterised in that** the gap tube (9) is designed such that the inner diameter of the gap tube (9) decreases from the second axial end (12) to the first axial end (11).

## Revendications

1. Actionneur (1) pour un système de freinage et/ou d'embrayage d'un véhicule automobile, comportant un carter (2), dans lequel est disposée une machine électrique (3) comportant un stator (4) et un rotor (5) disposé à rotation par rapport à ce stator (4), qui est conçue pour déplacer axialement un piston (6), le rotor (5) étant entouré d'un fluide de travail et la machine électrique (3) étant accouplée fonctionnellement à un entraînement linéaire (13) qui est conçu pour déplacer le piston (6) lors du mouvement, **caractérisé en ce qu'**entre le carter (2) et le rotor (5) est disposée une chemise d'entrefer (9) rendant étanche le stator (4) par rapport au fluide de travail au moyen d'un premier joint d'étanchéité (7) et au moyen d'un second joint d'étanchéité (8), le premier joint d'étanchéité (7) et le second joint d'étanchéité (8) étant en contact avec le carter (2) et la chemise d'entrefer (9),
le premier joint d'étanchéité (7) et/ou le second joint d'étanchéité (8) étant conçu(s) comme un joint adhésif (19) ou comme un adhésif et
la première extrémité axiale (11) et/ou la seconde extrémité axiale (12) de la chemise d'entrefer (9) étant disposée(s) dans une rainure (23) dans le carter (2).

2. Actionneur (1) selon la revendication 1, **caractérisé en ce que** le premier joint d'étanchéité (7) est disposé entre un carter de stator (10) conçu sur le carter (2), qui loge le stator (4), et la chemise d'entrefer (9).

3. Actionneur (1) selon la revendication 1 ou 2, **caractérisé en ce que** le second joint d'étanchéité (8) est disposé entre le carter (2) et la chemise d'entrefer (9).

4. Actionneur (1) selon l'une quelconque des revendications 1 à 3, **caractérisé en ce que** le premier joint d'étanchéité (7) est disposé sur une première extrémité axiale (11) de la chemise d'entrefer (9) et le second joint d'étanchéité (8) est disposé sur une seconde extrémité axiale (12) de la chemise d'entrefer (9).

5. Actionneur (1) selon la revendication 1, **caractérisé en ce que** l'entraînement linéaire (13) est conçu comme un entraînement fileté à roulement planétaire (14).

6. Actionneur (1) selon l'une quelconque des revendications 1 à 5, **caractérisé en ce que** le premier joint d'étanchéité (7) et/ou le second joint d'étanchéité (8) est/sont conçu(s) comme une bague d'étanchéité (18).

7. Actionneur (1) selon l'une quelconque des revendications 1 à 6, **caractérisé en ce que** la chemise d'entrefer (9) est conçue de manière à ce que le diamètre intérieur de la chemise d'entrefer (9) diminue de la seconde extrémité axiale (12) à la première extrémité axiale (11).
